# EUROPÄISCHE PATENTSCHRIFT

(11) **EP 1 615 750 B1**
(45) Veröffentlichungstag und Bekanntmachung des Hinweises auf die Patenterteilung: **19.12.2007**
(21) Anmeldenummer: 03782091.7
(22) Anmeldetag: 05.11.2003
(51) Int. Cl.: B25J 21/02, G21F 7/047, G21F 7/005, B01L 1/02

(54) **TÜR-VORRICHTUNG MIT EINEM DOPPELBAJONETTVERSCHLUSS FÜR EINEN ISOLATOR**
DOOR DEVICE COMPRISING A DOUBLE BAYONET SOCKET FOR AN INSULATOR
DISPOSITIF DE PORTE POURVU D'UNE DOUBLE FERMETURE A BAÏONNETTE POUR UN ISOLATEUR

(30) Priorität: 12.04.2003 WO PCT/DE03/01220
(43) Veröffentlichungstag der Anmeldung: 18.01.2006
(73) Patentinhaber: Imbolex GmbH, 88448 Attenweiler (DE)
(72) Erfinder: OSTERMEYER, Thomas, 88400 Biberach (DE)
(74) Vertreter: Kiessling, Christian
(86) Internationale Anmeldenummer: PCT/DE2003/003663
(87) Internationale Veröffentlichungsnummer: WO 2004/091868

(56) Entgegenhaltungen:
- WO-A-03/041087
- FR-A- 2 613 526
- US-A- 4 494 586

## Beschreibung

Die Erfindung betrifft eine an einem Rahmen eines Isolators zu befestigende Tür-Vorrichtung mit einer Türe und mit einem zwei Bajonettverschlüsse unterschiedlicher Chiralität aufweisenden Doppelbajonettverschluss zum reziprozierbaren Überführen des Isolators aus einem ersten Zustand, in dem die von der Innenseite des Isolators zu öffnende Türe offen und von dem Isolatorrahmen gelöst ist und ein eine Öffnung eines Behälters umschließender Behälterflansch mit dem Isolatorrahmen abgedichtet fest verbunden ist, in einem zweiten Zustand, in dem die Türe geschlossen und mit dem Isolatorrahmen angedichtet fest verbunden ist und der Behälterflansch von dem Isolatorrahmen gelöst ist, wobei eine erste Sicherungseinrichtung vorgesehen ist, die ein Öffnen der Türe nur dann ermöglicht, wenn ein Behälterflansch eines Behälters mit dem Isolatorrahmen abgedichtet fest verbunden ist, und eine zweite Sicherungseinrichtung vorgesehen ist, die ein Abnehmen des Behälterflanschs von dem Isolatorrahmen nur dann ermöglicht, wenn die Türe abgedichtet fest mit dem Isolatorrahmen verbunden ist, mit einem lösbar arretierbaren Verriegelungsring.

Eine solche Tür-Vorrichtung ist aus dem Dokument US-A-4 494 586 bekannt.

Tür-Vorrichtungen der eingangs genannten Art sind im Stand der Technik in einer Vielzahl unterschiedlichster Ausführungsformen bekannt, denen jedoch sämtlich ein gleiches oder ähnliches Wirkprinzip gemein ist. Die bekannten Isolatortüren weisen dabei in der Regel eine über ein Scharnier an einem Rahmen befestigte Türe auf, wobei die Türe einen Bajonettverschluss enthält, der es ermöglicht, eine die Öffnung eines Flansch verschließende Wechselscheibe während eines Öffnungsvorgangs der Türe fest mit der Türe zu verbinden und dabei gleichzeitig über einen zweiten Bajonettverschluss von dem Flansch zu lösen, wobei die Wechselscheibe in geöffnetem Zustand der Türe reversibel lösbar mit derselben verbunden ist. Bei Schließen der Türe durch Handbetätigung über in das Innere des Isolators eingreifende Schutzhandschuhe wird die Türe zuerst mittels eines Riegels fest mit dem Rahmen des Isolators verbunden, und es wird anschließend durch entsprechendes Zurückdrehen der an dem Flansch befestigten Handgriffe mit Hilfe des doppelten Bajonettverschluss erreicht, dass zum einen die Wechselscheibe von der Türe gelöst wird und gleichzeitig mit dem Flansch verbunden wird, und zum anderen, dass der Flansch von dem Rahmen der Türe gelöst wird, wobei die Wechselscheibe dann wieder die Öffnung des Flansches verschließend fest mit dem Flansch verbunden ist.

Das Doppelbajonett der bekannten Tür-Vorrichtungen erfüllt dadurch, dass die beiden Bajonettverschlüsse zueinander eine unterschiedliche Chiralität aufweisen, d.h. ein Bajonettverschluss mit einem Rechtsgewinde versehen ist und der entsprechend andere Bajonettverschluss mit einem Linksgewinde versehen ist, bei Drehen der an dem Flansch angebrachten Handgriffe die Doppelfunktion des Befestigens des Flansches an dem Rahmen bei gleichzeitigem Lösen der Wechselscheibe von dem Rahmen und Befestigen der Wechselscheibe an der Türe, wie auch bei entsprechender Funktionsumkehr des Lösens des Flansches von dem Rahmen bei gleichzeitigem Übergang der Wechselscheibe von einer Verbindung mit der Türe auf eine Verbindung mit dem Flansch.

Im Zusammenhang mit der oben dargelegten Funktionalität des bekannten Doppelbajonettes ergeben sich bei einer Verwendung an einem Isolator jedoch zwei funktionsbedingte kritische Schwachpunkte, deren Eintreffen unter allen Umständen zu verhindern ist. Dies ist zum einen ein Zustand des Isolators, in dem die Türe bei Absenz eines Behälters zu Öffnen wäre. Zum anderen ist dies ein Zustand des Isolators, in dem der Behälter bei geöffneter Türe von dem Rahmen abnehmbar wäre.

Eine Aufgabe der Erfindung ist deshalb das Schaffen einer Tür-Vorrichtung, bei der sichergestellt ist, dass die Türe nicht vom Inneren des Isolators her zu öffnen ist, wenn kein Flansch eines Behälters an dem Isolatorrahmen angedockt ist und ein Bajonett des Flansches demnach nicht in einen entsprechenden Bajonettgang eingedreht ist, sowie das Schaffen einer weiteren Sicherungseinrichtung, die verhindert, dass das Bajonett des Flansches des an dem Isolatorrahmen befestigtem Behälters bei geöffneter Türe und in eine Position bewegbar ist, aus der der Flansch von dem Isolatorrahmen abnehmbar ist.

Für eine Tür-Vorrichtung der eingangs genannten Art wird diese Aufgabe dadurch gelöst, dass der Verrriegelungsring innerhalb des Isolatorrahmens drehbar gelagert ist, und dass in einer Endposition des Verriegelungsringes die erste Sicherungseinrichtung aktiviert und die zweite Sicherungseinrichtung deaktiviert ist, und in dessen anderen Endposition die erste Sicherungseinrichtung deaktiviert und die zweite Sicherungseinrichtung aktiviert ist.

Bevorzugte Ausführungsformen der Erfindung sind Gegenstand der Unteransprüche.

Bei der erfindungsgemäßen Tür-Vorrichtung wird durch das Merkmal, dass innerhalb des Isolatorrahmens der Verriegelungsring drehbar gelagert vorgesehen ist, und dass in einer Endposition des Verriegelungsringes die erste Sicherungseinrichtung aktiviert und die zweite Sicherungseinrichtung deaktiviert ist, und in dessen anderen Endposition die erste Sicherungseinrichtung deaktiviert und die zweite Sicherungseinrichtung aktiviert ist, erreicht, dass eine Tür-Vorrichtung für eine Isolator geschaffen ist, bei der in allen Betriebssituationen ein Höchstmass an Sicherheit gegen ungewollte Kontamination des um den Isolator ambienten Raumbereiches gegeben ist, da weder die Isolatortür von innen unabsichtlich geöffnet werden kann noch der Behälterflansch von außen unabsichtlich gelöst werden kann.

Gemäß einer ersten bevorzugten Ausführungsform der erfindungsgemäßen Tür-Vorrichtung ist vorgesehen, dass der Verriegelungsring mit einem Rotationsgriff versehen ist.

Gemäß einer wichtigen bevorzugten Ausführungsform der erfindungsgemäßen Tür-Vorrichtung ist vorgesehen, dass die erste Sicherungseinrichtung einen ersten Stift enthält, der in dem Isolatorrahmen reziprozierbar verschiebbar gelagert ist und bei einem Eindrehen eines Behälterbajonettes in den Isolatorrahmen aus einer vorgespannten Ruheposition in Richtung auf den Verriegelungsring zu bewegbar ist und dabei an ein in einer Ruheposition vorgespanntes Angreifelement angrenzt, das durch die Wirkung des Stiftes so weit anhebbar ist, dass es schlüssig mit dem Verriegelungsring abschließt, um den Verriegelungsring für eine Rotation innerhalb des Isolatorrahmens freizugeben, bei der der Verriegelungsring aus einer ersten Endposition, in der die Isolatortür fest verschlossen ist, in eine andere Endposition zu drehen ist, in der die Türe zu öffnen ist.

Das Angreifelement kann dabei beispielsweise als weiterer Stift ausgebildet sein, und zur Vorspannung des Angreifelementes kann beispielsweise eine Helikal-Feder vorgesehen sein.

Gemäß einer anderen wichtigen bevorzugten Ausführungsform der erfindungsgemäßen Tür-Vorrichtung ist vorgesehen, dass die zweite Sicherungseinrichtung einen in dem Verriegelungsring vorgesehenen, gebogenen und teilweise helikal ausgebildeter Kanal enthält, in dessen dem Isolator zugewandte Öffnung die mit seitlichen Rollen versehene Türe einsetzbar ist, wobei in der dem Isolator fernen Fläche des Kanals ein an ein reziprozierbar verschiebbares Eingreifelement angrenzender zweiter Stift reziprozierbar verschiebbar gelagert ist, der so vorgespannt ist, dass er durch die Wirkung einer in den gebogenen Kanal eingeführten und durch Drehen des Verriegelungsringes in die erste, die Türe schließende Endposition bis zu einer Endstirnfläche des Kanals weitergeführten Rolle einer Türe aus seiner vorgespannten Ruheposition, in der das Eingreifelement in eine Aussparung in dem Behälterbajonett eingreift um das Behälterbajonett zu arretieren, in eine verschobene Position bringbar ist, in der das Eingreifelement das Behälterbajonett für ein Ausdrehen und ein späteres erneutes Eindrehen freigibt.

Vorzugsweise ist dabei am Isolatorrahmen mindestens eine mit der Türe zusammenwirkende Arretiereinrichtung vorgesehen ist, die eine Rotation der Türe bei einem Drehen des Verriegelungsringes verhindert. Eine derartige Arretiereinrichtung kann ebenfalls als Stift ausgebildet sein, der in eine entsprechende Aussparung im Bereich der Peripherie der im Querschnitt kreisförmig ausgebildeten Türe eingreift. Vorzugsweise sind zwei sich peripher gegenüberliegenden Arretiereinrichtungen vorgesehen.

Eine Türe ist gemäß bevorzugter Ausführungsformen mit zwei seitlichen Rollen versehen ist, deren Drehachsen radial zur kreisförmigen Türe ausgerichtet sind.

Der zweite Stift kann als Schraube ausgeführt sein, und zur Vorspannung des zweiten Stiftes ist vorzugsweise eine Helikal-Feder vorgesehen.

Die erfindungsgemäße Tür-Vorrichtung wird im folgenden anhand einer bevorzugten Ausführungsform erläutert, die in den Figuren der Zeichnung dargestellt ist. Darin zeigen:
- Fig.1: den Rahmen einer bevorzugten Ausführungsform der erfindungsgemäßen Tür-Vorrichtung in einer schrägen Draufsicht aus Richtung des Isolators;
- Fig.2: den in Figur 1 dargestellten Rahmen der bevorzugten Ausführungsform einer erfindungsgemäßen Tür-Vorrichtung in einer schrägen Draufsicht aus Richtung des Behälters;
- Fig.3: einen offene Behälter der bevorzugten Ausführungsform der erfindungsgemäßen Tür-Vorrichtung in einer Ansicht von schräg vorne;
- Fig.4: den in Figur 3 dargestellten Behälter der bevorzugten Ausführungsform der erfindungsgemäßen TürVorrichtung in einer Ansicht von vorne;
- Fig.5: eine Behälter-Verschließeinheit einer Türe der bevorzugten Ausführungsform der erfindungsgemäßen Tür-Vorrichtung in einer Ansicht von schräg vorne aus Richtung des Behälters;
- Fig.6: die in Figur 5 dargestellte Behälter-Verschließeinheit einer Türe der erfindungsgemäßen TürVorrichtung in einer Ansicht von schräg vorne aus Richtung des Isolators;
- Fig.7: eine Türe der bevorzugten Ausführungsform der erfindungsgemäßen Tür-Vorrichtung in einer Ansicht von schräg vorne aus Richtung des Isolators;
- Fig.8: die in Figur 7 dargestellte Türe der erfindungsgemäßen Tür-Vorrichtung in einer Ansicht von schräg vorne aus Richtung des Behälters;
- Fig.9: eine bevorzugte Ausführungsform der erfindungsgemäßen Tür-Vorrichtung in einer Querschnittsansicht, aus der sich die Funktion der ersten Sicherungseinrichtung ergibt;
- Fig.10: eine bevorzugte Ausführungsform der erfindungsgemäßen Tür-Vorrichtung in einer Querschnittsansicht, aus der sich die Funktion der zweiten Sicherungseinrichtung ergibt.

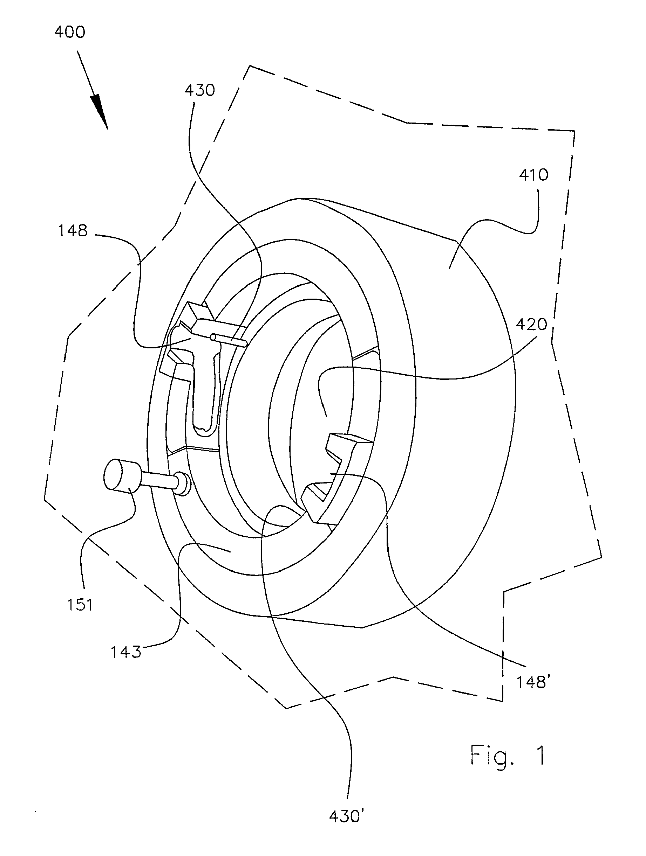

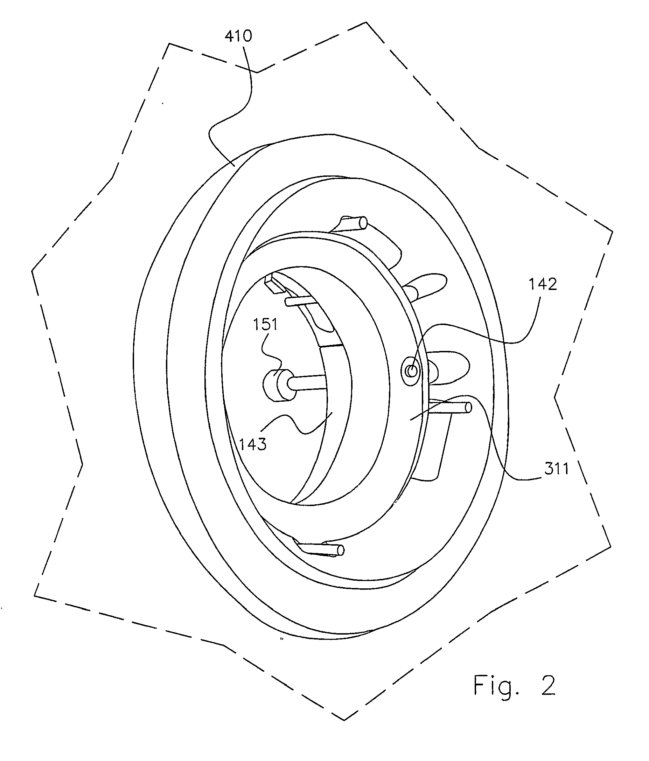

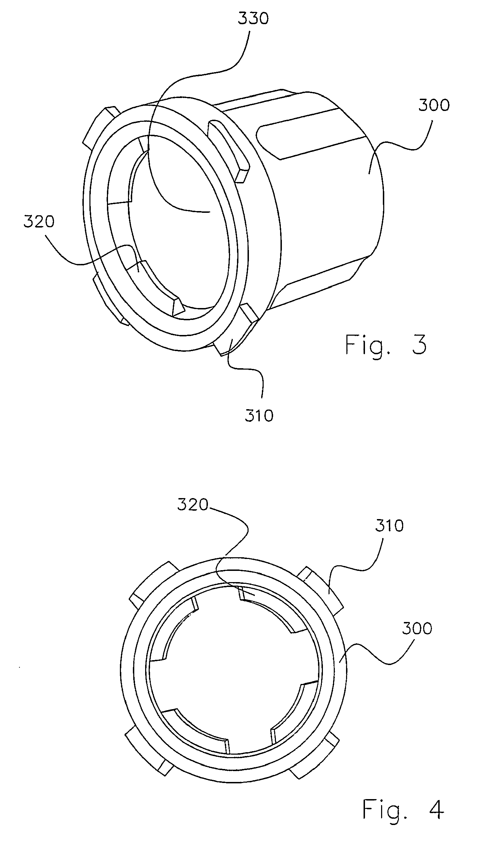

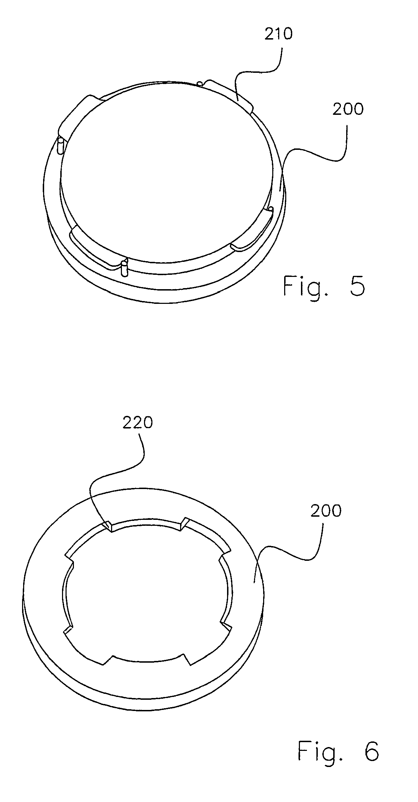

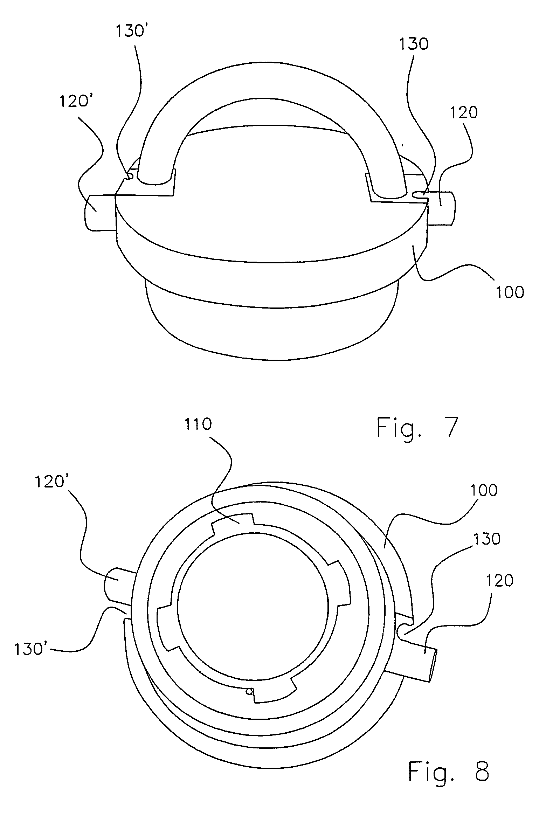

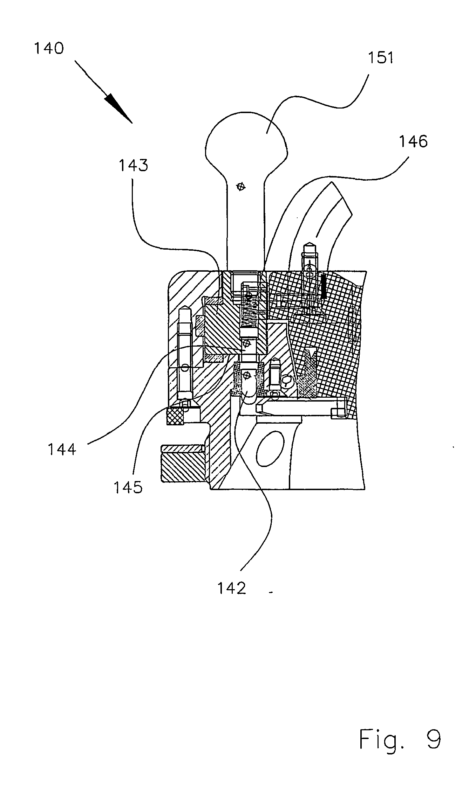

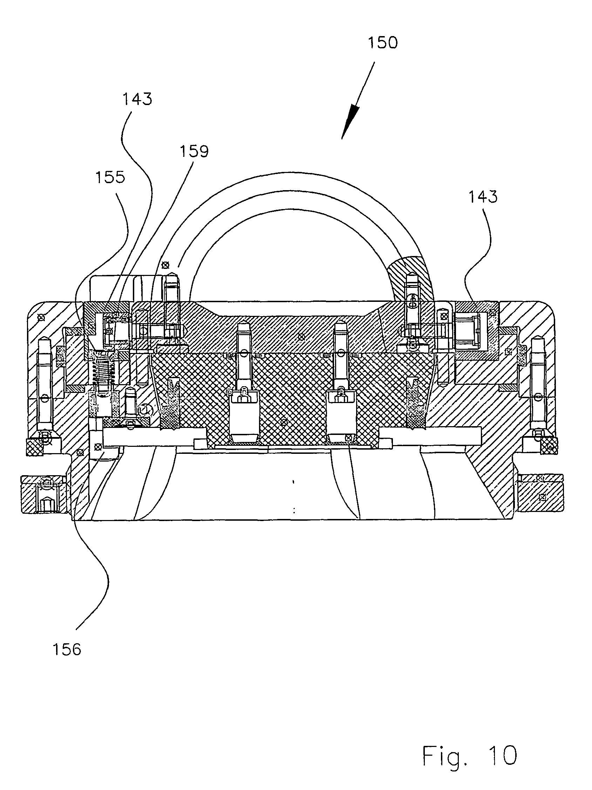

Die in den Figuren 1 bis 10 dargestellte Ausführungsform der erfindungsgemäßen Tür-Vorrichtung 100, 200 für einen Isolator 400 weist einen Isolatorrahmen 410 auf, in dem eine Öffnung 420 ausgebildet ist, die von einer Türe 100 lösbar verschließbar ist, und enthält des weiteren einen aus zwei Bajonettverschlüssen 110,220; 210,320 unterschiedlicher Chiralität zusammengesetzten Doppelbajonettverschluss. Ein verschließbarer Behälter 300 ist mit einem Behälterbajonett 310 versehen, dass mit einem am Isolatorrahmen 410 ausgebildeten Bajonettgegenlager 311 zusammenwirkt.

Der aus einem Türbajonett 110 und einem Türbajonettlager 220 einerseits und aus einem Verschließeinheitsbajonett 210 und einem Verschließeinheitsbajonettlager 320 zusammengesetzte Doppelbajonettverschluss ermöglicht ein reziprozierbares Überführen des Isolators 400 aus einem ersten Zustand, in dem die von der Innenseite des Isolators 400 zu öffnende Türe 100 offen und von dem Isolatorrahmen 410 gelöst ist und in dem ein eine Öffnung 330 eines Behälters 300 umschließendes Behälterbajonett 310 mit dem Isolatorrahmen 410 abgedichtet fest verbunden ist, in einem zweiten Zustand, in dem die Türe 100 geschlossen und mit dem Isolatorrahmen 410 abgedichtet fest verbunden ist, wobei das Behälterbajonett 310 von dem Isolatorrahmen 410 gelöst ist.

Eine im Isolatorrahmen 410 ausgebildete erste Sicherungseinrichtung 140 ermöglicht ein Öffnen der Türe 100 nur dann, wenn ein Behälterbajonett 310 eines Behälters 300 mit dem Isolatorrahmen 410 abgedichtet fest verbunden ist, und eine zweite Sicherungseinrichtung 150 ermöglicht ein Abnehmen des Behälterbajonetts 310 von dem Isolatorrahmen 410 nur dann, wenn die Türe 100 abgedichtet fest mit dem Isolatorrahmen 410 verbunden ist.

Die erfindungsgemäße Tür-Vorrichtung 100 enthält erfindungswesentlich einen im Isolatorrahmen 410 drehbar gelagerten und lösbar arretierbaren Verriegelungsring 143, in dessen einer Endposition die erste Sicherungseinrichtung 140 aktiviert und die zweite Sicherungseinrichtung 150 deaktiviert ist, und in dessen anderen Endposition die erste Sicherungseinrichtung 140 deaktiviert und die zweite Sicherungseinrichtung 150 aktiviert ist. Der Verriegelungsring 143 ist mit einem Rotationsgriff 151 versehen.

Die erste Sicherungseinrichtung 140 enthält einen ersten Stift 142, der in dem Isolatorrahmen 410 reziprozierbar verschiebbar gelagert ist und bei einem Eindrehen eines Behälterbajonettes 310 eines Behälters 300 in den Isolatorrahmen 410 aus einer vorgespannten Ruheposition in Richtung auf den Verriegelungsring 143 zu bewegbar ist und dabei an ein in einer Ruheposition vorgespanntes Angreifelement 144 angrenzt, das durch die Wirkung des Stiftes 142 so weit anhebbar ist, dass es schlüssig mit einer entsprechenden Oberfläche 145 des Verriegelungsringes 143 abschließt, um den Verriegelungsring 143 für eine Rotation innerhalb des Isolatorrahmens 410 freizugeben, bei der der Verriegelungsring 143 aus einer ersten Endposition, in der die Isolatortür 100 fest verschlossen ist, in eine andere Endposition zu drehen ist, in der die Isolatortür 100 zu öffnen ist. Das Angreifelement 144 ist als weiterer Stift ausgeführt, und zur Vorspannung des Angreifelementes 144 ist eine Feder 146 vorgesehen. Vor einem Eindrehen eines Behälterbajonettes 310 eines Behälters 300 in den Isolatorrahmen 410 ist der Behälter 300 von einer an einem inneren Bajonettgegenlager 320 des Behälters 300 verankerten Verschließeinheit 200 einer Türe 100 fest verschlossen.

Die zweite Sicherungseinrichtung 150 enthält zwei in dem Verriegelungsring 143 vorgesehene, gebogene und teilweise helikal ausgebildete Kanäle 148, 148', in deren dem Isolator zugewandte Öffnung 420 die mit seitlichen Rollen 120, 120' versehene Türe 100 einsetzbar ist, wobei in der dem Isolator fernen Fläche des Kanals 148 ein an ein reziprozierbar verschiebbares Eingreifelement 156 angrenzender zweiter Stift 155 reziprozierbar verschiebbar gelagert ist, der so vorgespannt ist, dass er durch die Wirkung einer in den gebogenen Kanal 148 eingeführten und durch Drehen des Verriegelungsringes 143 in die erste, die Türe schließende Endposition bis zu einer Endstirnfläche des Kanals weitergeführten Rolle 120, 120' einer Türe 100 aus seiner vorgespannten Ruheposition, in der das Eingreifelement 156 in eine Aussparung in dem Behälterbajonett eingreift um das Behälterbajonett 310 zu arretieren, in eine verschobene Position bringbar ist, in der das Eingreifelement 156 das Behälterbajonett 310 für ein Ausdrehen und ein späteres erneutes Eindrehen des Behälterbajonetts 310 freigibt.

Durch Drehen des Verriegelungsringes 143 in die erste, die Türe 100 schließende Endposition wird die an einem inneren Bajonettgegenlager 320 des Behälters 300 verankerte Verschließeinheit 200 von dem Behälter 300 gelöst und auf die Türe 100 transferiert.

Am Isolatorrahmen 410 ist mindestens eine mit der Türe 100 zusammenwirkende Arretiereinrichtung vorgesehen, die eine Rotation der Türe 100 bei einem Drehen des Verriegelungsringes 143 verhindert. Eine Arretiereinrichtung ist dabei als Stift ausgebildet, der in eine entsprechende Aussparung im Bereich der Peripherie der im Querschnitt kreisförmig ausgebildeten Türe 100 eingreift.

Eine Türe 100 ist mit zwei seitlichen Rollen 120, 120' versehen, deren Drehachsen radial zur kreisförmigen Türe 100 ausgerichtet sind. Der zweite Stift 155 ist als Schraube ausgeführt. Zur Vorspannung des zweiten Stiftes 155 ist eine Helikal-Feder 159 vorgesehen.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. An einem Isolatorrahmen zu befestigende Tür-Vorrichtung (110, 120) für einen Isolator (200), mit einer Türe (110) und einem zwei Bajonettverschlüsse (121, 311; 122, 211) unterschiedlicher Chiralität aufweisenden Doppelbajonettverschluss zum reziprozierbaren Überführen des Isolators (200) aus einem ersten Zustand, in dem die von der Innenseite des Isolators (100) zu öffnende Türe (110) offen und von dem Isolatorrahmen (130) gelöst ist und ein eine Öffnung eines Behälters (300) umschließender Behälterflansch (310) mit dem Isolatorrahmen (220) abgedichtet fest verbunden ist, in einem zweiten Zustand, in dem die Türe (110) geschlossen und mit dem Isolatorrahmen (220) angedichtet fest verbunden ist und der Behälterflansch (310) von dem Isolatorrahmen (220) gelöst ist, wobei eine erste Sicherungseinrichtung (140) vorgesehen ist, die ein Öffnen der Türe (110) nur dann ermöglicht, wenn ein Behälterflansch (310) eines Behälters (300) mit dem Isolatorrahmen (220) abgedichtet fest verbunden ist, und eine zweite Sicherungseinrichtung (150) vorgesehen ist, die ein Abnehmen des Behälterflanschs (310) von dem Isolatorrahmen (220) nur dann ermöglicht, wenn die Türe (110) abgedichtet fest mit dem Isolatorrahmen (220) verbunden ist, mit einem lösbar arretierbaren Verriegelungsring (143), **dadurch gekennzeichnet dass** der Verriegelungsring innerhalb des Isolatorrahmens drehbar gelagert ist, und dass in einer Endposition des Verriegelungsringes (143) die erste Sicherungseinrichtung (140) aktiviert und die zweite Sicherungseinrichtung (150) deaktiviert ist, und in dessen anderen Endposition die erste Sicherungseinrichtung (140) deaktiviert und die zweite Sicherungseinrichtung (150) aktiviert ist.

2. Vorrichtung nach Anspruch 1, **dadurch gekennzeichnet, dass** der Verriegelungsring (143) mit einem Rotationsgriff (151) versehen ist.

3. Vorrichtung nach einem der Ansprüche 1 oder 2, **dadurch gekennzeichnet, dass** die erste Sicherungseinrichtung einen ersten Stift (142) enthält, der in dem Isolatorrahmen reziprozierbar verschiebbar gelagert ist und bei einem Eindrehen eines Behälterbajonettes in den Isolatorrahmen aus einer vorgespannten Ruheposition in Richtung auf den Verriegelungsring (143) zu bewegbar ist und dabei an ein in einer Ruheposition vorgespanntes Angreifelement (144) angrenzt, das durch die Wirkung des Stiftes (142) so weit anhebbar ist, dass es schlüssig mit dem Verriegelungsring (143) abschließt, um den Verriegelungsring (143) für eine Rotation innerhalb des Isolatorrahmens freizugeben, bei der der Verriegelungsring aus einer ersten Endposition, in der die Isolatortür fest verschlossen ist, in eine andere Endposition zu drehen ist, in der die Türe zu öffnen ist.

4. Vorrichtung nach Anspruch 3, **dadurch gekennzeichnet, dass** das Angreifelement als weiterer Stift ausgeführt ist.

5. Vorrichtung nach einem der Ansprüche 3 oder 4, **dadurch gekennzeichnet, dass** zur Vorspannung des Angreifelementes (144) eine Helikal-Feder (146) vorgesehen ist.

6. Vorrichtung nach einem oder mehr der vorhergehenden Ansprüche, **dadurch gekennzeichnet, dass** die zweite Sicherungseinrichtung einen in dem Verriegelungsring vorgesehenen, gebogenen und im wesentlichen helikal ausgebildeter Kanal (148) enthält, in dessen dem Isolator zugewandte Öffnung die mit seitlichen Rollen versehene Türe einsetzbar ist, wobei in der dem Isolator fernen Fläche des Kanals (148) ein an ein reziprozierbar verschiebbares Eingreifelement (146) angrenzender zweiter Stift (145) reziprozierbar verschiebbar gelagert ist, der so vorgespannt ist, dass er durch die Wirkung einer in den gebogenen Kanal (148) eingeführten und durch Drehen des Verriegelungsringes in die erste, die Türe schließende Endposition bis zu einer Endstirnfläche des Kanals weitergeführten Rolle einer Türe aus seiner vorgespannten Ruheposition, in der das Eingreifelement (146) in eine Aussparung in dem Behälterbajonett eingreift um das Behälterbajonett zu arretieren, in eine verschobene Position bringbar ist, in der das Eingreifelement (146) das Behälterbajonett für ein Ausdrehen und ein späteres erneutes Eindrehen freigibt.

7. Vorrichtung nach Anspruch 6, **dadurch gekennzeichnet, dass** am Isolatorrahmen mindestens eine mit der Türe zusammenwirkende Arretiereinrichtung vorgesehen ist, die eine Rotation der Türe bei einem Drehen des Verriegelungsringes (143) verhindert.

8. Vorrichtung nach Anspruch 7, **dadurch gekennzeichnet, dass** eine Arretiereinrichtung als Stift ausgebildet ist, der in eine entsprechende Aussparung im Bereich der Peripherie der im Querschnitt kreisförmig ausgebildeten Türe eingreift.

9. Vorrichtung nach einem der Ansprüche 6 bis 8, **dadurch gekennzeichnet, dass** eine Türe mit zwei seitlichen Rollen versehen ist, deren Drehachsen radial zur kreisförmigen Türe ausgerichtet sind.

10. Vorrichtung nach einem der Ansprüche 6 bis 9, **dadurch gekennzeichnet, dass** der zweite Stift (145) als Schraube ausgeführt ist.

11. Vorrichtung nach einem der Ansprüche 3 oder 4, **dadurch gekennzeichnet, dass** zur Vorspannung des zweiten Stiftes (145) eine Helikal-Feder (149) vorgesehen ist.

## Claims

1. A door installation (110, 120) to be attached to a frame of an insulator (200), wherein said door installation comprises a door (110) and a double bayonet lock comprising two bayonet locks (121, 311; 122,211) showing different chiralities for the purpose of reciprocatorily transferring the insulator (100) from a first state, in which the door (110), which opens from inside the insulator (100), is open and detached from the insulator frame (130) and a container flange (310) surrounding an opening of a container (300) is firmly secured to the insulator frame (220), to a second state, in which the door (110) is closed and firmly secured to the insulator frame (220) and the container flange (310) is detached from the insulator frame, there being provided a first safety device (140), which allows the door to be opened only when a container flange (310) of a container (300) is firmly secured to the insulator frame, and a second safety device (150), which allows for the removal of the container flange (310) from the insulator frame (220) only when the door (110) is firmly secured to the insulator frame (220), with a detachably lockable locking ring, **characterized in that** said locking ring is mounted for rotation in the insulator frame and in one end position of said locking ring (143) the first safety device (140) is activated and the second safety device (150) is deactivated, and in the other end position of said locking ring (143) the first safety device (140( is deactivated and the second safety device (150) is activated.

2. The door installation as defined in claim 1, **characterized in that** said locking ring (143) is provided with a rotary handle (151).

3. The door installation as defined in claim 1 or claim 2, **characterized in that** said first safety device comprises a first pin (142) which is mounted in the insulator frame such that it can be displaced reciprocatorily, and, when a container bayonet is turned into the insulator frame, can be moved from a biased home position in the direction of the locking ring (143) to come to bear against an engagement member (144), which is based to a position of rest and which can be lifted by means of the pin to such an extent that said engagement member comes into alignment with the locking ring (143) and the latter is thus free to rotate within the insulator frame from one end position, in which the insulator door is tightly locked, to the other end position, in which the door can be opened.

4. The door installation as defined in claim 3, **characterized in that** said engagement member is in the form of another pin.

5. The door installation as defined in claim 3 or claim 4, **characterized in that** a spiral spring (146) is provided for biasing said engagement member (144).

6. The door installation as defined in any one of the previous claims, **characterized in that** the second safety device comprises a curved and partly helical channel (148) which is provided in the locking ring, and the door, which is provided with lateral rollers, can be inserted into that opening of said channel (148) which faces the insulator, there being provided a second reciprocatorily displaceable pin (145) mounted **in that** surface of the channel (148) which is remote from the insulator, which pin (145) adjoins a reciprocatorily displaceable engagement member (146) and is biased such that, due to the action of a door roller caused by insertion thereof into the curved channel (148) and rotation of the locking ring so as to move said roller into its first end position, thus closing the door, said pin can be moved from its biased home position, in which said engagement member (146) engages in a recess in the container bayonet in order to lock the container bayonet in position, to a displaced position, in which said engagement member (146) releases the container bayonet so that it can be turned out and, later, turned back in.

7. The door installation as defined in claim 6, **characterized in that** at least one arresting device cooperating with the door is provided on the insulator frame to prevent the door from rotating when the locking ring (143) is turned.

8. The door installation as defined in claim 7, **characterized in that** said arresting device is in the form of a pin which engages in a corresponding recess in the region of the periphery of the door of circular cross-section.

9. The door installation as defined in any one of claims 6 to 8, **characterized in that** a door is provided with two lateral rollers, whose axes of rotation are radially aligned with respect to the circular door.

10. The door installation as defined in any one of claims 6 to 9, **characterized in that** said second pin (145) is in the form of a screw.

11. The door installation as defined in claim 3 or claim 4, **characterized in that** a spiral spring (149) is provided for biasing said second pin (145).

## Revendications

1. Dispositif de porte (110, 120) pour un isolateur (200) devant être fixé sur un encadrement d'isolateur, avec une porte (110) et une double fermeture à baïonnette comportant deux fermetures à baïonnette (121, 311; 122, 211) ; (210, 320) de chiralité différente, ce dispositif étant destiné à transférer alternativement l'isolateur (200) d'un premier état dans lequel la porte (110) à ouvrir du côté intérieur de l'isolateur (100) est ouverte et libérée de l'encadrement de l'isolateur (130), et dans lequel une bride de contenant (310) entourant une ouverture d'un contenant (300) est reliée fermement et de manière étanche à l'encadrement de l'isolateur (220), à un deuxième état dans lequel la porte (110) est fermée et reliée fermement et de manière étanche à l'encadrement de l'isolateur (220), et dans lequel la bride de contenant (310) est libérée de l'encadrement de l'isolateur (220), un premier appareillage de sécurité (140) étant prévu, ce premier appareillage de sécurité ne permettant une ouverture de la porte (110) que quand une bride de contenant (310) d'un contenant (300) est reliée fermement et de manière étanche à l'encadrement de l'isolateur (220), et un deuxième appareillage de sécurité (150) étant prévu, ce deuxième appareillage de sécurité ne permettant de délier la bride de contenant (310) de l'encadrement de l'isolateur (220) que quand la porte (110) est reliée fermement et de manière étanche à l'encadrement de l'isolateur (220), avec une bague de verrouillage (143) pouvant être bloquée de manière libérable, **caractérisé par le fait que** la bague de verrouillage est montée à rotation à l'intérieur de l'encadrement de l'isolateur, et **par le fait que**, dans une position finale de la bague de verrouillage (143), le premier appareillage de sécurité (140) est activé et le deuxième appareillage de sécurité (150) est désactivé, et que, dans son autre position finale, le premier appareillage de sécurité (140) est désactivé et le deuxième appareillage de sécurité (150) est activé.

2. Dispositif selon la revendication 1, **caractérisé par le fait que** la bague de verrouillage (143) est pourvue d'une poignée de rotation (151).

3. Dispositif selon l'une des revendications 1 ou 2, **caractérisé par le fait que** le premier appareillage de sécurité comporte une première goupille (142) montée dans l'encadrement de l'isolateur de manière à permettre un mouvement de va-et-vient et pouvant être déplacée, en faisant tourner une baïonnette de contenant située dans l'encadrement de l'isolateur, d'une position de repos précontrainte en direction de la bague de verrouillage (143), étant alors contiguë à un élément d'attaque (144) précontraint en position de repos qui, sous l'effet de la goupille (142), est soulevable au point de se terminer positivement avec la bague de verrouillage (143) afin de libérer la bague de verrouillage (143) pour une rotation à l'intérieur de l'encadrement de l'isolateur, lors de laquelle la bague de verrouillage peut être tournée à partir d'une première position finale dans laquelle la porte de l'isolateur est solidement fermée sur une autre position finale dans laquelle la porte peut être ouverte.

4. Dispositif selon la revendication 3, **caractérisé par le fait que** l'élément d'attaque est réalisé sous forme d'une autre goupille.

5. Dispositif selon l'une des revendications 3 ou 4, **caractérisé par le fait que** pour la précontrainte de l'élément d'attaque (144), il est prévu un ressort hélicoïdal (146).

6. Dispositif selon l'une ou plusieurs des revendications précédentes, **caractérisé par le fait que** le deuxième appareillage de sécurité comporte un canal (148) arqué de forme principalement hélicoïdale prévu dans la bague de verrouillage, la porte pourvue de rouleaux latéraux pouvant être introduite dans l'ouverture de ce canal orientée vers l'isolateur, une deuxième goupille (145) étant montée dans la surface du canal (148) éloignée par rapport à l'isolateur de manière contiguë à un élément d'attaque (146) pouvant effectuer un mouvement de va-et-vient, cette deuxième goupille étant montée de manière à permettre un mouvement de va-et-vient et précontrainte de telle façon que, par l'effet d'un rouleau de porte introduit dans le canal arqué (148) et conduit par rotation de la bague de verrouillage dans la première position finale fermant la porte jusqu'à l'extrémité d'une surface frontale du canal, elle peut être amenée de sa position de repos précontrainte dans laquelle l'élément d'attaque (146) s'engage dans un évidement se trouvant dans la baïonnette de contenant afin de bloquer la baïonnette de contenant, à une position différée dans laquelle l'élément d'attaque (146) libère la baïonnette de contenant pour permettre de la revisser puis de la dévisser ultérieurement.

7. Dispositif selon la revendication 6, **caractérisé par le fait qu'**il est prévu que l'encadrement de l'isolateur est pourvu d'au moins un appareillage de blocage agissant en concomitance avec la porte, cet appareillage évitant une rotation de la porte lorsque la bague de verrouillage (143) est tournée.

8. Dispositif selon la revendication 7, **caractérisé par le fait qu'**un appareillage de blocage est réalisé sous forme d'une goupille qui s'engage dans un évidement correspondant situé au niveau de la périphérie de la porte, cette dernière ayant une forme transversalement circulaire.

9. Dispositif selon l'une des revendications 6 à 8, **caractérisé par le fait qu'**une porte est pourvue de deux rouleaux latéraux dont les axes de rotation sont orientés radialement par rapport à la porte circulaire.

10. Dispositif selon l'une des revendications 6 à 9, **caractérisé par le fait que** la deuxième goupille (145) est réalisée sous forme de vis.

11. Dispositif selon l'une des revendications 3 ou 4, **caractérisé par le fait que** pour la précontrainte de la deuxième goupille (145), il est prévu un ressort hélicoïdal (149).
